# EUROPÄISCHE PATENTSCHRIFT

(11) **EP 1 557 925 B1**
(45) Veröffentlichungstag und Bekanntmachung des Hinweises auf die Patenterteilung: **22.06.2011**
(21) Anmeldenummer: 05000563.6
(22) Anmeldetag: 13.01.2005
(51) Int. Cl.: H02J 3/18, H02J 3/38, H02M 5/458

(54) **Stromrichterschaltungsanordnung und zugehöriges Ansteuerverfahren für Generatoren mit dynamisch veränderlicher Leistungsabgabe**
Power converter apparatus and related driving method for generators with dynamically varying output power
Convertisseur de puissance pour des générateurs avec puissance variable dynamiquement

(30) Priorität: 24.01.2004 DE 102004003657
(43) Veröffentlichungstag der Anmeldung: 27.07.2005
(73) Patentinhaber: SEMIKRON Elektronik GmbH & Co. KG, 90431 Nürnberg (DE)
(72) Erfinder: Schreiber, Dejan, 90408 Nürnberg (DE); Heilbronner, Heinrich, Dr., 90547 Stein (DE)

(56) Entgegenhaltungen:
- WO-A-03/065567
- DE-A1- 10 105 892
- DE-A1- 19 651 364

## Beschreibung

Die vorliegende Offenbarung beschreibt eine Stromrichterschaltungsanordnung zur Anbindung eines dreiphasigen Generators an ein Stromnetz. Derartige Schaltungsanordnungen finden beispielhaft in einer Windkraftanlage Anwendung. Hierbei ist eine dynamisch variierende Ausgangsleistung des Generators durch die natürlichen Gegebenheiten, die unterschiedlichen Windgeschwindigkeiten, selbstverständlich.

Der im Generator erzeugte Strom muss allerdings spannungs-, frequenz- und phasengerecht in ein bestehendes Stromnetz eingespeist werden. Typische Größen hierfür sind Spannungen von einigen Hundert bis zu einigen 10kV und Frequenzen von 50Hz oder 60Hz.

Der Stand der Technik bei Windenergieanlagen mit zeitlich variierender dynamischer Leistungsabgabe der Strom erzeugenden Generatoren wird beispielhaft gebildet durch folgende Technologien.

Die DE 101 14 075 A1 offenbart eine komplexe Anbindung eines Generators mit dynamischer Leistungsabgabe an ein Mittelspannungsstromnetz. Hierbei ist der Generator mit einem Brückengleichrichter verbunden. Dieser erzeugt eine Gleichspannung von einigen Kilovolt, die über eine Gleichspannungsverbindung mit einer kaskadierten Anordnung von Wechselrichterzellen verbunden ist. Diese äußerst flexible Stromrichterschaltungsanordnung kann auf Grund der kaskadierten Wechselrichterzellen und der dort integrierten Aufwärtswandler bei einer großen Varianz der Windgeschwindigkeiten und damit einhergehenden unterschiedliche Ausgangsspannungen des Generators sehr effizient arbeiten. Nachteilig an einer derartigen Stromrichterschaltungsanordnung ist allerdings, dass hier keine günstigen und robusten Asynchronmaschinen verwendet werden können, da diese zur Erregung ein magnetisches Drehfeld benötigen. Weiterhin nachteilig ist der relativ hohe schaltungstechnische Aufwand, der beispielhaft den Einbau einer derartigen Schaltungsanordnung in bestehende Windkraftanlagen schon aus wirtschaftlichen Gründen ausschließt.

Die US 5,652,485 offenbart eine einfache Möglichkeit der Anbindung einer Windkraftanlage an ein Stromnetz. Hierin wird ein Vierquadrantenwechselrichter direkt mit seinen Wechselspannungsanschlüssen zwischen den Ausgang des Generators und das Stromnetz geschaltet. Eine Fuzzy- Logik dient hier einer geeignete Ansteuerung des Vierquadrantenwechselrichters. Es ist hierbei selbstverständlich, dass der Vierquadrantenwechselrichter eine Leistungsfähigkeit aufweisen muss, die der maximal vom Generator abgegebenen Leistung entspricht, vorteilhafterweise ist diese Leistungsfähigkeit zur Gewährleistung eines sicheren Betriebs zu sogar ein wenig höher als diejenige des Generators.

Näheres zum Stand der Technik enthält DE 101 05 892, die eine Windenergieanlage und Verfahren zum Betreiben einer Windenergieanlage offenbart. Unter anderem wird gelehrt, dass bei Windenergieanlagen das so genannte "dänische Konzept" sehr weit verbreitet ist, bei dem eine schleifringlose Asynchronmaschine ohne Stromrichter mittels einer Synchronisations- bzw. Hochlaufeinrichtung direkt mit der Netzspannung verbunden ist. Konkret bezieht sich dieses Dokument auf eine Windenergieanlage, in der sichergestellt wird, dass während eines normalen Betriebs eine Leistung bis zu einem vorgegebenen Schwellenwert abgegeben wird, während eines Netzausfalls im Fall einer kurzzeitigen Netzunterbrechung die Windenergieanlage in Betrieb bleibt, jedoch keine Energie an das Netz abgibt und im Fall einer längerfristigen Netzunterbrechung die Windenergieanlage weich ausgeschaltet wird. Zu diesem Zweck ist in der Windenergieanlage lediglich ein Zweig ausgebildet, der den Asynchrongenerator bzw. Generator mit dem Netz verbindet, so dass eine zuverlässige und schnelle Reaktion auf wechselnde Netzzustände möglich ist. Dieser Zweig weist einen Generatorstromrichter, einen Zwischenkreis sowie einen Netzstromrichter auf. Zur Umwandlung von überschüssiger Energie, die nicht in das Netz eingespeist werden kann, ist, um eine Abschaltung bei kurzfristigen Netzunterbrechungen zu verhindern bzw. eine weiche Abschaltung bei einer längerfristigen Netzunterbrechung zu ermöglichen, ein Momentanüberspannungsbegrenzer im Zwischenkreis ausgebildet, in dem diese in Wärmeenergie umgewandelt wird.

Stromrichtersystem mit einer DE 101 05 892 offenbart ein Stromrichterschaltungsanordnung zur Verbindung eines dreiphasigen Generators mit einem Stromnetz, und einer Steuerung, wobei die Stromrichterschaltungsanordnung aus einer ersten direkten Verbindung des Generators mit dem Stromnetz, wobei diese Verbindung in jeder Phase einen Schalter aufweist, und einer zweiten Verbindung des Generators mit dem Stromnetz besteht.

DE 196 51 364 offenbart eine Vorrichtung zur Verbesserung der Netzverträglichkeit von Windkraftanlagen mit Asynchrongeneratoren. Konkret wird eine Einrichtung gelehrt, die die Netzverträglichkeit von Windkraftanlagen zur Einspeisung in das öffentliche Stromversorgungsnetz ermöglicht. Dem öffentlichen Versorgungsnetz ist dabei eine elektronisch gesteuerte Einrichtung parallel geschaltet, die einen Energie-Zwischenspeicher beinhaltet. Mit dieser Einrichtung können Schaltspitzen, die bei verschiedenen Schaltvorgängen im Netz auftreten, weitgehend verringert werden.

WO 03/065567 lehrt eine Schaltungsanordnung zum Einsatz bei einer Windenergieanlage sowie eine insbesondere zum Einsatz bei einer Windenergieanlage mit variabler Drehzahl bestimmte Schaltungsanordnung umfassend einen doppeltgespeisten Asynchrongenerator, einen Zusatzwiderstand und einen Umrichter. Es wird eine Schaltungsanordnung vorgesehen, bei welcher der Zusatzwiderstand mittels eines schnellen Schalters derart regelbar ist, dass der Umrichter im Netzkurzschlussfall zumindest teilweise vorübergehend abschaltbar ist, um den Rotorstrom mittels des Zusatzwiderstandes kurzzeitig zu übernehmen, und nach Abklingen des Rotorkurzschlussstromes zur aktiven Einkopplung eines Kurzschlussstromes ins Netz wieder zuschaltbar ist.

Die einfachste Möglichkeit der Anbindung einer Windkraftanlage an ein Stromnetz ist die direkte Verbindung des Generators der Windkraftanlage mit dem Stromnetz. Hierbei kommen als Generatoren vorzugsweise Asynchronmaschinen auf Grund ihrer Robustheit zum Einsatz. Eine derart einfache Schaltungsanordnung hat allerdings mehrere Nachteile. Bei geringen Wndgeschwindigkeiten ist wegen der konstant gehaltenen Generatordrehzahl eine Ankopplung auf Grund der mangelnden Ausgangsleistung an das Stromnetz nicht oder nur mit stark eingeschränktem Wirkungsgrad möglich. Weiterhin ist mit dieser Schaltungsanordnung nicht in jedem Betriebszustand eine durch die Energieversorgungsunternehmen geforderte Blindleistungskompensation möglich.

Die vorliegende offenbarung beschreibt weiterhin ein Ansteuerverfahren einer Stromrichterschaltungsanordnung zur Blindleistungskompensation im Falle eines Netzkurzschlusses. Bei einem Netzkurzschluss bleibt in der Regel, falls die Kurzschlussstelle eine gewissen Entfernung von der zu betrachtenden Stelle aufweist, eine Restspannung erhalten. Falls diese Restspannung noch einen definierten Wert, der abhängig ist von den Vorgaben des Netzbetreibers, beispielhaft 15% der Nennspannung, aufweist, muss eine dort angeordnete Einspeisestelle, beispielsweise eine Windkraftanlage, Blindleistung in das Stromnetz einspeisen können. Eine Windkraftanlage der oben beschriebenen Bauweise mit direkter Ankopplung des Generators an das Stromnetz kann diese Vorgabe nicht leisten.

Die vorliegende Offenbarung hat die Aufgabe eine Stromrichterschaltungsanordnung vorzustellen, die die direkte Verbindung eines Generators mit dynamisch veränderlicher Ausgangsleistung an ein Stromnetz derart erweitert, dass der Drehzahlbereich des Generators, in dem eine effiziente Einspeisung in ein Stromnetz möglich ist, zu kleinen Drehzahlen hin erweitert wird, diese Erweiterung auch in bestehende Schaltungsanordnungen integriert werden kann und eine Blindleistungskompensation während des gesamten Betriebs möglich ist, sowie ein Ansteuerverfahren vorzustellen, das im Fall eines Netzkurzschlusses Blindleistung in das Stromnetz einspeisen kann.

Die Aufgabe wird gelöst durch eine Stromrichterschaltungsanordnung mit den Merkmalen des Anspruchs 1 oder 2, sowie ein Ansteuerverfahren nach den Merkmalen des Anspruchs 6 oder 9. Bevorzugte Weiterbildungen finden sich in den Unteransprüchen.

Die hier beschriebene Stromrichterschaltungsanordnung zur Verbindung eines dreiphasigen Generators mit einem Stromnetz besteht aus zwei Einzelverbindungen. Die erste Verbindung ist eine direkte Verbindung des Generators mit dem Stromnetz, wobei diese Verbindung in jeder Phase einen Schalter aufweist, womit diese Verbindung unterbrochen werden kann. Die zweite Verbindung des Generators mit dem Stromnetz besteht aus einem Vierquadrantenumrichter bestehend aus zwei Stromrichtern, ihrerseits bestehend aus je drei Halbbrückenschaltungsanordnungen je zweier Leistungsschalter. Dieser Vierquadrantenumrichter weist maximal die halbe Nennleistung des Generators auf. Die zweite Verbindung ist derart angeordnet, dass die Wechselspannungsanschlüsse des ersten Stromrichters mit den drei Phasen des Generators verbunden sind. Die Wechselspannungsanschlüsse des zweiten Stromrichters sind mit den drei Phasen des Stromnetzes verbunden. Weiterhin sind die beiden Stromrichter mit einem gemeinsamen Gleichstromzwischenkreis verbunden, wobei hier zwischen dem positiven und dem negativen Anschluss des Gleichspannungszwischenkreises mindestens ein Kondensator geschaltet ist.

Das hier beschriebene Ansteuerverfahren für eine oben genannte Stromrichterschaltungsanordnung zur Blindleistungskompensation im Falle eines Netzkurzschlusses, wobei die verbliebene Netzspannung gleich oder größer als 10% der Nennspannung ist, kann in drei Zeiträume eingeteilt werden. Die gesamte Kurzschlussphase bis zu einem Wiedererreichen von mindestens 80% der Nennspannung sollte beispielhaft drei Sekunden dauern. Direkt nach dem Kurzschluss wird der Generator bei direkter Verbindung mit dem Stromnetz auf Grund mangelnder Netzspannung auslaufen und automatisch vom Stromnetz getrennt. Bei einer Verbindung über den Vierquadrantenumrichter ist der Generator bereits nicht direkt mit dem Stromnetz verbunden.

In diesem ersten Zeitraum nach dem Kurzschluss liefert bei geöffneten Schaltern zwischen dem Generator und dem Stromnetz der netzseitige Stromrichter des Vierquadrantenumrichters über seine Wechselspannungsanschlüsse Blindleistung mittels der im Zwischenkreis gespeicherten Energie in das Stromnetz. Während eines anschließenden zweiten Zeitraums bei ebenfalls offenen Schaltern zwischen dem Generator und dem Stromnetz entnimmt der netzseitige Stromrichter Wirkleistung zum Ausgleich seiner internen Verluste aus dem Stromnetz und liefert Blindleistung an das Stromnetz. Während dieses zweiten Zeitraums steigt die Netzspannung in der Regel wieder an. Bei Erreichen von 80% der Nennspannung werden die Einspeisestellen wieder zugeschaltet. In diesem dritten Zeitraum bei noch geöffneten Schaltern zwischen dem Generator und dem Stromnetz steuert der gesamte Vierquadrantenumrichter den sanften Wiederanlauf des Generators, wobei hierdurch keine Netzbelastung mit Blindleistung entsteht.

Im weiteren Zeitverlauf wird abhängig von der Windgeschwindigkeit und der damit erzielbaren Generatorleistung der Generator, entweder weiterhin über den Vierquadrantenumrichter oder direkt über geschlossene Schalter mit dem Stromnetz verbunden, Energie an das Stromnetz liefern.

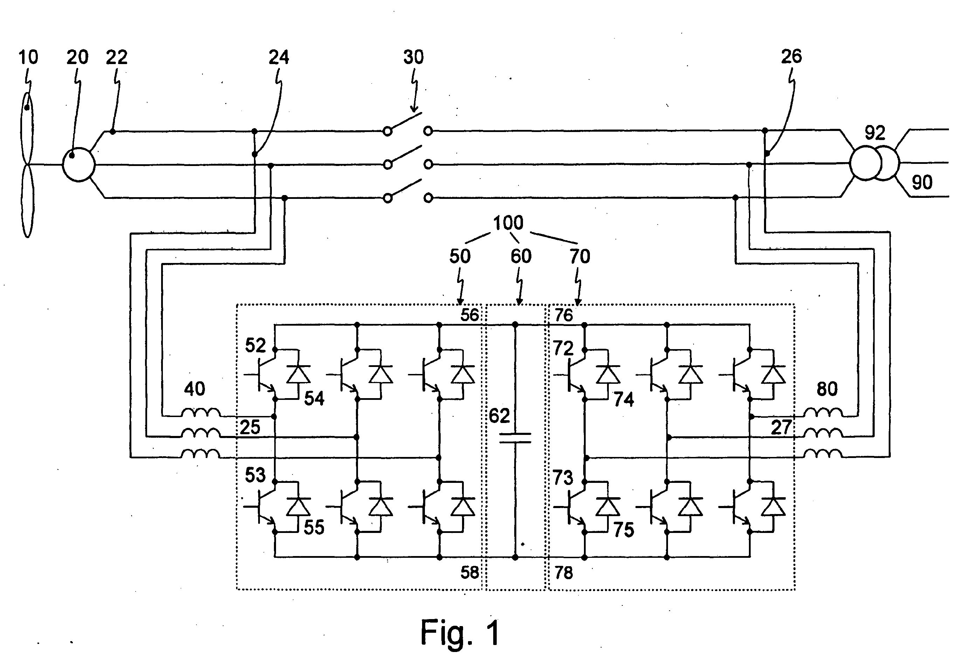

Nachfolgend werden die Merkmale und Ausgestaltungen der Erfindung anhand der Fig. 1 beispielhaft erläutert, wobei die erfindungsgemäße Stromrichterschaltungsanordnung in einer Windkraftanlage angeordnet ist.

Dargestellt ist eine Windkraftanlage mit einem Rotor (10), welcher über ein Getriebe einen Generator (20) antreibt. Bei diesem Generator (20) handelt es sich um eine Asynchronmaschine mit einer Nennausgangsspannung von 690V nach dem Stand der Technik. Die drei Ausgangsphasen (22) sind über einen Transformator (92) mit einem Mittelspannungsstromnetz (90) verbunden. Soweit entspricht das Dargestellte dem Stand der Technik, wie er bereits vielfach als Windkraftanlage im Einsatz ist.

Zur kostengünstigen Erweiterung einer bestehenden oder auch zur Herstellung einer neuen, kostengünstigen Windkraftanlage wird die dargestellte Schaltungsanordnung um eine Stromrichterschaltung erfinderisch erweitert. Diese Stromrichterschaltung ist als Vierquadrantenumrichter (100) ausgestaltet und besteht generator- wie auch netzseitig aus je einem Stromrichter (50, 70) seinerseits bestehend aus jeweils drei Halbbrückenschaltungen. Diese Halbbrückenschaltungen bestehen ihrerseits aus je einem oberen (52, 72)und einem unteren (53, 73) Leistungshalbleiterschalter jeweils mit antiparallel geschalteter Freilaufdiode (54, 55, 74, 75). Die beiden Stromrichter (50, 70) sind mit ihren Gleichstromausgängen (56, 58, 76, 78) durch einen Gleichstromzwischenkreis (60) mit einem Energie speichernden Kondensator (62) verbunden.

Zur Einbindung des Vierquadrantenwechselrichters in die bekannte Schaltungsanordnung weist diese in den drei Phasen (22) der Verbindung vom Generator (20) zum Stromnetz (90) einen Schalter (30) je Phase auf. Vorzugsweise besteht jeder dieser Schalter (30) aus je zwei antiparallel geschalteten Leistungshalbleiterschaltern, wie Thyristoren. Die Wechselstromanschlüsse (25) des generatorseitigen Stromrichters (50) sind jeweils über eine Drossel (40) mit den drei Phasen (22) des Generators (20) verbunden. Diese Verbindung (24) liegt auf der Generatorseite der Schalter (30). Die Wechselstromanschlüsse (27) des netzseitigen Stromrichters (70) sind ebenfalls jeweils über eine Drossel (80) mit den drei Phasen (22) des Generators verbunden, allerdings liegt diese Verbindung (26) auf der Netzseite der Schalter (30).

Bei geringen Windgeschwindigkeiten wird mittels der Schalter (30) die erste, also die direkte Verbindung des Generators (20) mit dem Stromnetz (90) getrennt. Die Energie fließt nun über den Vierquadrantenumrichter (100) zum Stromnetz. Da diese Verbindung nur für geringe Windgeschwindigkeiten und damit geringe Drehzahlen und geringere produzierte Energiemengen geschaltet ist, ist es ausreichend den Vierquadrantenumrichter (100) auf maximal die Hälfte, vorzugsweise nur ein Drittel der Leistung des Generators (20) auszulegen. Dies hat einerseits den wirtschaftlichen Vorteil der geringeren Kosten eines leistungsschwächeren Vierquadrantenumrichters (100), andererseits wird hierdurch der mechanische Einbau erleichtert.

Bei höheren Windgeschwindigkeiten sind die Schalter (30) geschlossen, der Strom fließt direkt vom Generator (20) zum Stromnetz (90). In diesem Fall liefern hier beide Stromrichter (50, 70) des Vierquadrantenumrichters (100) durch geeignete Ansteuerung die vom Netzbetreiber geforderte Blindleistung an das Stromnetz (90).

Der Vierquadrantenumrichter (100) der erfindungsgemäßen Stromrichterschaltungsanordnung dient im Falle eines Netzkurzschlusses zur Blindleistungskompensation des Stromnetzes (90). Aufgrund der Anforderungen der Netzbetreiber ist nach dem Stand der Technik nach etwa drei Sekunden die Netzspannung zu mindestens 80% wiederhergestellt. Während dieser Zeit müssen Einspeisestellen, wie Windkraftanlagen, Blindleistung in das Stromnetz einspeisen. Hierzu dient mittels des erfindungsgemäßen Ansteuerverfahren angesteuert der netzseitige Stromrichter (70) des Vierquadrantenumrichter (100).

Im Folgenden wird davon ausgegangen, dass der Generator (20) direkt, also über geschlossene Schalter (30) mit dem Stromnetz (90) verbunden ist. Nach dem Netzkurzschluss bricht die Spannung des Stromnetzes (90) auf beispielsweise 20% des Nennwertes zusammen. Nach einem Zeitraum von ca. 150ms beginnt die Netzspannung wieder anzusteigen, bis nach drei Sekunden die Nennspannung wieder annährend erreicht ist.

Der Generator (20) liefert im Fall des Netzkurzschlusses auf Grund fehlender Fremderregung nur noch für wenige Perioden Strom und wird daher automatisch mittels der Schalter (30) vom Stromnetz getrennt. Somit weist nur noch der netzseitige Stromrichter (70) mit seinen Wechselspannungsanschlüssen eine Verbindung zum Stromnetz (90) auf und kann zur Blindleistungseinspeisung ins Stromnetz beitragen. Direkt nach dem Netzkurzschluss wird der netzseitige Stromrichter (70) derart angesteuert, dass er Blindleistung an das Stromnetz (90) liefert. Hierbei dient in einem ersten Zeitraum nach dem Netzkurzschluss der Zwischenkreis (60) als Energielieferant. Während dieser Blindleistungseinspeisung können bei Bedarf kurzzeitig auch Ströme über dem Nennstrom der Leistungsschalter, hier Leistungstransistoren (72, 73)(vorzugsweise IGBTs = Insulated Gate Bipolar Transistor) eingespeist werden, solange eine thermische Überlastung, die zur Zerstörung der Leistungstransistoren führt, vermieden wird.

In einem zweiten Zeitraum, bis die Netzspannung wieder 80% der Nennspannung erreicht hat, entnimmt der netzseitige Stromrichter (70) Wirkleistung aus dem Stromnetz (90) und speist Blindleistung zurück. Die Entnahme der Wirkleistung ist notwendig, da die Verluste, wie beispielsweise Schaltverluste der IGBTs (72, 73), innerhalb des Stromrichters (70) ausgeglichen werden müssen.

Nach Erreichen von 80% der Nennspannung im dritten Zeitraum wird der Generator (20) wieder zugeschaltet. Der Vierquadrantenumrichter (100) wird nun derart angesteuert, dass ein sanfter Wiederanlauf des Generators (20) ohne Netzbelastung mit Blindleistung gewährleistet ist. Anschließend werden die Schalter (30) geöffnet und ein Betrieb wie vor dem Netzkurzschluss ist wiederum möglich.

## Patentansprüche

1. Stromrichtersystem mit
einer Stromrichterschaltungsanordnung zur Verbindung eines dreiphasigen Generators (20) mit einem Stromnetz (90); und
einer Steuerung, wobei
die Stromrichterschaltungsanordnung aus einer ersten direkten Verbindung des Generators (20) mit dem Stromnetz (90), wobei diese Verbindung in jeder Phase (22) einen Schalter (30) aufweist, und einer zweiten Verbindung des Generators (20) mit dem Stromnetz (90) besteht, wobei hier ein Vierquadrantenumrichter (100) mit maximal der halben Nennleistung des Generators (20) derart angeordnet ist, dass der Vierquadrantenumrichter (100) aus einem ersten Stromrichter (50) besteht, dessen drei Wechselspannungsanschlüsse (24) mit den drei Anschlüssen des Generators (20) und dessen Gleichstromanschlüsse (56, 58) mit einem Zwischenkreis (60) mit einem Kondensator (62) verbunden sind, und einem zweiten Stromrichter (70), dessen drei Wechselspannungsanschlüsse (26) mit dem Stromnetz (90) und dessen Gleichstromanschlüsse (76, 78) mit dem Zwischenkreis (60) verbunden sind, und die Steuerung die Stromrichterschaltungsanordnung derart ansteuert, dass die erste direkte Verbindung des Generators (20) mit dem Stromnetz (90) bei geringen Windgeschwindigkeiten getrennt und dass bei höheren Windgeschwindigkeiten die Schalter (30) geschlossen werden, damit ein Strom direkt vom Generator (20) zum Stromnetz (90) fließt, und der erste und zweite Stromrichter (50, 70) des Vierquadrantenumrichters (100) Blindleistung an das Stromnetz liefern.

2. Stromrichtersystem mit
einer Stromrichterschaltungsanordnung zur Verbindung eines dreiphasigen Generators (20) einer Windkraftanlage mit einem Stromnetz (90); und
einer Steuerung, wobei
die Stromrichterschaltungsanordnung aus einer ersten direkten Verbindung des Generators (20) mit dem Stromnetz (90), wobei diese Verbindung in jeder Phase (22) einen Schalter (30) aufweist, und einer zweiten Verbindung des Generators (20) mit dem Stromnetz (90) besteht, wobei hier ein Vierquadrantenumrichter (100) mit maximal der halben Nennleistung des Generators (20) derart angeordnet ist, dass der Vierquadrantenumrichter (100) aus einem ersten Stromrichter (50) besteht, dessen drei Wechselspannungsanschlüsse (24) mit den drei Anschlüssen des Generators (20) und dessen Gleichstromanschlüsse (56, 58) mit einem Zwischenkreis (60) mit einem Kondensator (62) verbunden sind, und einem zweiten Stromrichter (70), dessen drei Wechselspannungsanschlüsse (26) mit dem Stromnetz (90) und dessen Gleichstromanschlüsse (76, 78) mit dem Zwischenkreis (60) verbunden sind, und
die Steuerung die Stromrichterschaltungsanordnung derart ansteuert, dass im Falle eines Netzkurzschlusses, wobei die verbliebene Netzspannung gleich oder größer als 10% der Nennspannung ist,
der netzseitige Stromrichter (70) des Vierquadrantenumrichters (100) in einem ersten Zeitraum direkt nach dem Kurzschluss bei geöffneten Schaltern (30) zwischen dem Generator (20) und dem Stromnetz (90) Blindleistung mittels der im Zwischenkreis (60) gespeicherten Energie über seine Wechselspannungsanschlüsse (27) in das Stromnetz speist,
der netzseitige Stromrichter (70) während eines anschließenden zweiten Zeitraums bei ebenfalls offenen Schaltern (30) zwischen dem Generator (20) und dem Stromnetz (90) Wirkleistung zum Ausgleich seiner internen Verluste aus dem Stromnetz (90) entnimmt und Blindleistung an das Stromnetz (90) liefert, und
der Vierquadrantenumrichter (100) in einem dritten Zeitraum nach Erreichen von 80% der Nennspannung bei noch geöffneten Schaltern (30) zwischen dem Generator (20) und dem Stromnetz (90) einen sanften Wiederanlauf des Generators (20) ohne Netzbelastung mit Blindleistung steuert.

3. Stromrichterschaltungsanordnung nach Anspruch 1 oder 2, wobei jeder Stromrichter (50, 70) aus drei Halbbrückenschaltungen mit je einem oberen und einem unteren Leistungsschalter besteht.

4. Stromrichterschaltungsanordnung nach Anspruch 3, wobei jeder Leistungsschalter aus einem oder einer Mehrzahl von Leistungstransistoren (52, 53, 72, 73) mit jeweils einer oder einer Mehrzahl von antiparallel geschalteten Leistungsdioden (54, 55, 74, 75) besteht.

5. Stromrichterschaltungsanordnung nach Anspruch 1 oder 2, wobei die Schalter (30) jeweils aus je zwei antiparallel geschalteten Leistungshalbleiterschaltern, wie Thyristoren, bestehen.

6. Ansteuerverfahren für eine Stromrichterschaltungsanordnung zur Blindleistungskompensation im Falle eines Netzkurzschlusses, wobei
die Stromrichterschaltungsanordnung zur Verbindung eines dreiphasigen Generators (20) mit einem Stromnetz (90) gestaltet ist und aus einer ersten direkten Verbindung des Generators (20) mit dem Stromnetz (90), wobei diese Verbindung in jeder Phase (22) einen Schalter (30) aufweist, und einer zweiten Verbindung des Generators (20) mit dem Stromnetz (90) besteht, wobei hier ein Vierquadrantenumrichter (100) mit maximal der halben Nennleistung des Generators (20) derart angeordnet ist, dass der Vierquadrantenumrichter (100) aus einem ersten Stromrichter (50) besteht, dessen drei Wechselspannungsanschlüsse (24) mit den drei Anschlüssen des Generators (20) und dessen Gleichstromanschlüsse (56, 58) mit einem Zwischenkreis (60) mit einem Kondensator (62) verbunden sind, und einem zweiten Stromrichter (70), dessen drei Wechselspannungsanschlüsse (26) mit dem Stromnetz (90) und dessen Gleichstromanschlüsse (76, 78) mit dem Zwischenkreis (60) verbunden sind, und
die verbliebene Netzspannung gleich oder größer als 10% der Nennspannung ist, dergestalt, dass in einem ersten Zeitraum nach dem Kurzschluss, wobei die Schalter (30) bereits offen sind oder auf Grund des Netzkurzschlusses geöffnet werden, der netzseitige Stromrichter (70) über seine Wechselspannungsanschlüsse (24, 26) Blindleistung aus der im Zwischenkreis (60) gespeicherten Energie in das Stromnetz abgibt, in einem zweiten Zeitraum bei weiterhin offenen Schaltern (30) der Stromrichter (70) Blindleistung in das Stromnetz (90) zurückspeist und einem dritten Zeitraum bei geöffneten Schaltern (30) der gesamte Vierquadrantenumrichter (100) den sanften Wiederanlauf des Generators (20) steuert und hierbei die Netzbelastung mit Blindleistung minimal hält oder verhindert und anschließend der Generator wieder, entweder weiterhin über den Vierquadrantenumrichter (100) oder direkt verbunden, Energie an das Stromnetz (90) liefert.

7. Ansteuerverfahren nach Anspruch 6, wobei
innerhalb des ersten Zeitraums die Leistungsschalter der Stromrichter (50, 70) über ihre Nennbelastung hinaus belastet werden, solange dies für die Leistungsschalter zerstörungsfrei möglich ist.

8. Ansteuerverfahren nach Anspruch 6 oder 7, wobei der erste Zeitraum direkt nach dem Kurzschluss ist.

9. Verfahren zur Ansteuerung einer Stromrichterschaltungsanordnung zur Verbindung eines dreiphasigen Generators (20) einer Windkraftanlage mit einem Stromnetz (90) bestehend aus einer ersten direkten Verbindung des Generators (20) mit dem Stromnetz (90), wobei diese Verbindung in jeder Phase (22) einen Schalter (30) aufweist, und einer zweiten Verbindung des Generators (20) mit dem Stromnetz (90), wobei hier ein Vierquadrantenumrichter (100) mit maximal der halben Nennleistung des Generators (20) derart angeordnet ist, dass der Vierquadrantenumrichter (100) aus einem ersten Stromrichter (50) besteht, dessen drei Wechselspannungsanschlüsse (24) mit den drei Anschlüssen des Generators (20) und dessen Gleichstromanschlüsse (56, 58) mit einem Zwischenkreis (60) mit einem Kondensator (62) verbunden sind, und einem zweiten Stromrichter (70), dessen drei Wechselspannungsanschlüsse (26) mit dem Stromnetz (90) und dessen Gleichstromanschlüsse (76, 78) mit dem Zwischenkreis (60) verbunden sind, und
die Stromrichterschaltungsanordnung derart ansteuert wird, dass die erste direkte Verbindung des Generators (20) mit dem Stromnetz (90) bei geringen Windgeschwindigkeiten getrennt und dass bei höheren Windgeschwindigkeiten die Schalter (30) geschlossen werden, damit ein Strom direkt vom Generator (20) zum Stromnetz (90) fließt, und der erste und zweite Stromrichter (50, 70) des Vierquadrantenumrichters (100) Blindleistung an das Stromnetz liefern.

## Claims

1. A power converter system comprising:
a power converter circuit arrangement for connection of a three-phase generator (20) to a power grid (90); and
a controller, wherein
the power converter circuit arrangement consists of a first direct connection of the generator (20) to the power grid (90), wherein this connection, in each phase (22), comprises a switch (30), and a second connection of the generator (20) to the power grid (90), wherein here a four-quadrant inverter (100) with, at most, half the nominal power of the generator (20) is arranged in such a way that the four-quadrant inverter (100) consists of a first power converter (50) the three the alternating voltage terminals (24) of which are connected to the three terminals of the generator (20) and the three direct current terminals (56, 58) of which are connected to an intermediate circuit (60) comprising a capacitor (62), and a second current converter (70) the three alternating voltage terminals (26) of which are connected to the power grid (90) and the direct current terminals (76, 78) of which are connected with the intermediate circuit (60), and
wherein the controller drives the power converter circuit arrangement in such a way that the first direct connection of the generator (20), for low wind speeds, is disconnected and that for higher wind speeds, the switches (30) are closed, so that a current can flow directly from the generator (20) to the power grid (90), and the first and second power converters (50, 70) of the four-quadrant inverter (100) can supply reactive power to the power grid.

2. The power converter system comprising:
a power converter circuit arrangement for connection of a three-phase generator (20) of a wind power plant to a power grid (90); and
a controller, wherein
the power converter circuit arrangement consists of a first direct connection of the generator (20) to the power grid (90), wherein this connection, in each phase, comprises a switch (30), and a second connection of the generator (20) to the power grid (90), wherein here a four-quadrant inverter (100) with at most half the nominal power of the generator (20) is arranged in such a way that the four-quadrant inverter (100) consists of a first power converter (50) the three alternating voltage terminals (24) of which are connected to the three terminals of the generator (20) and the direct current terminals (56, 58) of which are connected to an intermediate circuit (60) comprising a capacitor (62), and a second power converter (70) the three alternating voltage terminals (26) of which are connected to the power grid (90) and the direct current terminals (76, 78) of which are connected with the intermediate circuit (60), and
wherein the controller drives the power converter circuit arrangement in such a way that in case of a mains short-circuit, wherein the remaining mains voltage is equal to or greater than 10% of the nominal voltage,
the net-side power converter (70) of the four-quadrant inverter (100), in a first time period directly following the mains short-circuit, with the switches (30) between the generator (20) and the power grid (90) being open, feeds reactive power into the power grid via its alternating voltage terminals (27)by means of the energy stored in the intermediate circuit (60),
the net-side power converter (70) during the subsequent time period, also with switches (30) between the generator (20) and the power grid (90) being open, draws effective power from the power grid (90) for compensating its internal losses, and supplies reactive power to the power grid (90), and
the four-quadrant inverter (100) in the third time period after reaching 80% of the nominal voltage with switches (30) between the generator (20) and the power grid (90) still open, controls a soft restart of generator (20) without loading the grid with reactive power.

3. The power converter circuit arrangement according to claim 1 or 2, wherein each power converter (50, 70) consists of three half-bridge circuits each comprising an upper and a lower power switch.

4. The power converter circuit arrangement according to claim 3, wherein each power switch consists of one or a plurality of power transistors (52, 53, 72, 73) with respectively one or a plurality of power diodes (54, 55, 74, 75) switched in anti-parallel.

5. The power converter circuit arrangement according to claim 1 or 2, wherein the switches (30) consist of two power semi-conductor switches respectively, such as thyristors, switched in anti-parallel.

6. A driving method for a power converter circuit arrangement for power factor correction in case of a mains short-circuit, wherein
the power converter circuit arrangement is laid out for connection of a three-phase generator (20) to a power grid (90) and consists of a first direct connection of the generator (20) to the power grid (90), wherein this connection, in each phase, comprises a switch (30), and a second connection of the generator (20) to the power grid (90), wherein here a four-quadrant inverter (100) with at most half the nominal power of the generator (20) is arranged in such a way that the four-quadrant inverter (100) consists of a first power converter (50) the three alternating voltage terminals (24) of which are connected to the three terminals of the generator (20) and the direct current terminals (56, 58) of which are connected with an intermediate circuit (60) comprising a capacitor (62), and a second power converter (70) the three alternating voltage terminals (26) of which are connected to the power grid (90) and the direct current terminals (76, 78) of which are connected with the intermediate circuit (60), and
the remaining mains voltage is equal to or greater than 10% of the nominal voltage, such that in a first time period following the mains short-circuit, wherein the switches (30) are already open or are opened due to the mains short-circuit, the net-side power converter (70), via its alternating voltage terminals (24, 26), offloads reactive power into the power grid from the energy stored in the intermediate circuit (60), in a second time period with switches (30) still open the power converter (70) feeds reactive power back into the power grid (90), and in a third time period with switches (30) open, the entire four-quadrant inverter (100) controls the soft restart of generator (20) whilst keeping the load on the grid through reactive power to a minimum or preventing it, and the generator subsequently, connected either via the four-quadrant inverter (100) as before or directly, supplies further energy to the power grid (90).

7. The driving method according to claim 6, wherein
within the first time period the power switches of power converters (50, 70) are loaded beyond their nominal load, so long as there is no danger of the power switches being destroyed.

8. The driving method according to claim 6 or 7, wherein the first time period is directly after the mains short-circuit.

9. A method for driving a power converter circuit arrangement for connection of a three-phase generator (20) of a wind power plant to a power grid (90) consisting of a first direct connection of the generator (20) to the power grid (90), wherein this connection, in each phase (22), comprises a switch (30), and a second connection of generator (20) to the power grid (90), wherein here a four-quadrant inverter (100) with, at most half the nominal power of the generator (20) is arranged in such a way that the four-quadrant inverter (100) consists of a first power converter (50) the three alternating voltage terminals (24) of which are connected to the three terminals of generator (20) and the direct current terminals (56, 58) of which are connected to an intermediate circuit (60) comprising a capacitor (62), and a second power converter (70) the three alternating voltage terminals (26) of which are connected with the intermediate circuit (60), and
the power converter circuit arrangement is driven in such a way that the first direct connection of generator (20) to the power grid (90), for low wind speeds, is disconnected and that for higher wind speeds, the switches (30) are closed, such that a current can flow directly from the generator (20) to the power grid (90), and the first and second power converters (50, 70) of the four-quadrant inverter (100) supply reactive to the power grid (90).

## Revendications

1. Système convertisseur comprenant
un agencement de circuit convertisseur pour la liaison d'un générateur (20) triphasé avec un réseau électrique (90) ; et
une commande,
l'agencement de circuit convertisseur comprenant une première liaison directe du générateur (20) avec le réseau électrique (90), cette liaison présentant un interrupteur (30) dans chaque phase (22), et une seconde liaison du générateur (20) avec le réseau électrique (90), un convertisseur à quatre cadrans (100) avec au maximum la demi-puissance nominale du générateur (20) étant disposé ici de telle sorte que le convertisseur à quatre cadrans (100) comprend un premier convertisseur (50), dont les trois branchements de tension alternative (24) sont reliés aux trois branchements du générateur (20) et dont les branchements de courant continu (56, 58) sont reliés à un circuit intermédiaire (60) avec un condensateur (62), et un second convertisseur (70) dont les trois branchements de tension alternative (26) sont reliés au réseau électrique (90) et dont les branchements de courant continu (76, 78) sont reliés au circuit intermédiaire (60), et
la commande actionne l'agencement de circuit convertisseur de telle sorte que la première liaison directe du générateur (20) avec le réseau électrique (90) est séparée en cas de faibles vitesses du vent et les interrupteurs (30) sont fermés en cas de vitesses du vent supérieures pour qu'un courant circule directement du générateur (20) vers le réseau électrique (90), et le premier et le second convertisseurs (50, 70) du convertisseur à quatre cadrans (100) fournissent de la puissance réactive au réseau électrique.

2. Système convertisseur comprenant
un agencement de circuit convertisseur pour la liaison d'un générateur (20) triphasé d'installation éolienne avec un réseau électrique (90) ; et
une commande,
l'agencement de circuit convertisseur étant constitué d'une première liaison directe du générateur (20) avec le réseau électrique (90), cette liaison présentant un interrupteur (30) dans chaque phase (22), et d'une seconde liaison du générateur (20) avec le réseau électrique (90), un convertisseur à quatre cadrans (100) avec au maximum la demi-puissance nominale du générateur (20) étant disposé ici de telle sorte que le convertisseur à quatre cadrans (100) comprend un premier convertisseur (50), dont les trois branchements de tension alternative (24) sont reliés aux trois branchements du générateur (20) et dont les branchements de courant continu (56, 58) sont reliés à un circuit intermédiaire (60) avec un condensateur (62), et un second convertisseur (70), dont trois branchements de tension alternative (26) sont reliés au réseau électrique (90) et dont les branchements de courant continu (76, 78) sont reliés au circuit intermédiaire (60), et
la commande actionne l'agencement de circuit convertisseur de telle sorte que, dans le cas d'un court-circuit du réseau, la tension de réseau restée est égale ou supérieure à 10 % de la tension nominale,
le convertisseur (70) côté réseau du convertisseur à quatre cadrans (100) injecte dans une première période directement après le court-circuit, avec les interrupteurs (30) ouverts, entre le générateur (20) et le réseau électrique (90) de la puissance réactive au moyen de l'énergie stockée dans le circuit intermédiaire (60) au moyen de ses branchements de tension alternative (27) dans le réseau électrique, et
le convertisseur (70) côté réseau prélève au cours d'une seconde période consécutive avec les interrupteurs (30) également ouverts entre le générateur (20) et le réseau électrique (90) de la puissance active sur le réseau électrique (90) pour la compensation de ses pertes internes et envoie de la puissance réactive au réseau électrique (90),
le convertisseur à quatre cadrans (100) commande dans une troisième période, après avoir atteint 80 % de la tension nominale, avec les interrupteurs (30) encore ouverts entre le générateur (20) et le réseau électrique (90) un redémarrage en douceur du générateur (20) sans charge du réseau avec de la tension réactive.

3. Agencement de circuit convertisseur selon la revendication 1 ou 2, chaque convertisseur (50, 70) étant constitué de trois circuits en demi-pont comprenant chacun un interrupteur de puissance supérieur et un interrupteur de puissance inférieur.

4. Agencement de circuit convertisseur selon la revendication 3, chaque interrupteur de puissance étant constitué d'un ou d'une pluralité de transistors de puissance (52, 53, 72, 73) avec respectivement une ou une pluralité de diodes de puissance (54, 55, 74, 75) branchées de façon antiparallèle.

5. Agencement de circuit convertisseur selon la revendication 1 ou 2, les interrupteurs (30) étant constitués chacun de deux interrupteurs à semi-conducteurs de puissance branchés de façon antiparallèle, tels que des thyristors.

6. Procédé d'amorçage pour un agencement de circuit convertisseur pour la compensation de puissance réactive dans le cas d'un court-circuit du réseau,
l'agencement de circuit convertisseur étant conçu pour la liaison d'un générateur (20) triphasé avec un réseau électrique (90) et étant constitué d'une première liaison directe du générateur (20) avec le réseau électrique (90), cette liaison présentant un interrupteur (30) dans chaque phase (22) et d'une seconde liaison du générateur (20) avec le réseau électrique (90), un convertisseur à quatre cadrans (100) avec au maximum la demi-puissance nominale du générateur (20) étant disposé ici de telle sorte que le convertisseur à quatre cadrans (100) est constitué d'un premier convertisseur (50), dont trois branchements de tension alternative (24) sont reliés aux trois branchements du générateur (20) et dont les branchements de courant continu (56, 58) sont reliés à un circuit intermédiaire (60) avec un condensateur (62), et d'un second convertisseur (70), dont trois branchements de tension alternative (26) sont reliés au réseau électrique (90) et dont les branchements de courant continu (76, 78) sont reliés au circuit intermédiaire (60), et
la tension de secteur restée étant égale ou supérieure à 10 % de la tension nominale, de telle sorte que, dans une première période après le court-circuit, les interrupteurs (30) étant déjà ouverts ou étant ouverts en raison du court-circuit du réseau, le convertisseur (70) côté secteur envoie par l'intermédiaire de ses branchements de tension alternative (24, 26) de la puissance réactive provenant de l'énergie stockée dans le circuit intermédiaire (60) dans le réseau électrique, le convertisseur (70) renvoie de la puissance réactive dans le réseau électrique (90) dans une seconde période avec des interrupteurs (30) toujours ouverts et l'ensemble du convertisseur à quatre cadrans (100) commande le redémarrage en douceur du générateur (20) dans une troisième période avec les interrupteurs (30) ouverts, et maintient dans le cas présent la charge de réseau avec de la puissance réactive à un niveau minimum ou l'empêche et ensuite le générateur fournit à nouveau, relié également par le convertisseur à quatre cadrans (100) ou relié directement, de l'énergie au réseau électrique (90).

7. Procédé d'amorçage selon la revendication 6,
les interrupteurs de puissance des convertisseurs (50, 70) étant chargés au-delà de leur charge nominale au cours de la première période aussi longtemps que ceci est possible sans destruction pour les convertisseurs de puissance.

8. Procédé d'amorçage selon la revendication 6 ou 7, la première période suivant directement le court-circuit.

9. Procédé pour l'actionnement d'un agencement de circuit convertisseur pour la liaison d'un générateur (20) triphasé d'une installation éolienne avec un réseau électrique (90) comprenant une première liaison directe du générateur (20) avec le réseau électrique (90), cette liaison présentant un interrupteur (30) dans chaque phase (22), et une seconde liaison du générateur (20) avec le réseau électrique (90), un convertisseur à quatre cadrans (100) avec au maximum la demi-puissance nominale du générateur (20) étant disposé ici de telle sorte que le convertisseur à quatre cadrans (100) comprend un premier convertisseur (50), dont trois branchements de tension alternative (24) sont reliés aux trois branchements du générateur (20) et dont les branchements de courant continu (56, 58) sont reliés à un circuit intermédiaire (60) avec un condensateur (62), et un second convertisseur (70), dont trois branchements de tension alternative (26) sont reliés au réseau électrique (90) et dont les branchements de courant continu (76, 78) sont reliés au circuit intermédiaire (60), et l'agencement de circuit convertisseur est activé de telle sorte que la première liaison directe du générateur (20) avec le réseau électrique (90) est séparée en cas de faibles vitesses du vent et en ce que, en cas de vitesses du vent supérieures, les interrupteurs (30) sont fermés, pour qu'un courant circule directement du générateur (20) vers le réseau électrique (90), et le premier et le second convertisseurs (50, 70) du convertisseur à quatre cadrans (100) fournissent de la puissance réactive au réseau électrique.
